# DEMANDE DE BREVET EUROPEEN

(11) **EP 4 650 198 A1**
(43) Date de publication de la demande: **19.11.2025**
(21) Numéro de dépôt: 25176136.7
(22) Date de dépôt: 13.05.2025
(51) Int. Cl.: B60J 5/04, E05B 77/04, B60R 21/02

(54) **RAIDISSEUR POUR LE BLOCAGE D'UN OUVRANT D'UN VÉHICULE**

(30) Priorité: 17.05.2024 FR 2405079
(71) Demandeur: Renault s.a.s, 92100 Boulogne Billancourt (FR)
(72) Inventeur: PRUVOST, Laurent, 78280 GUYANCOURT (FR)

(57) **Abrégé**

La présente invention concerne un raidisseur (14) comprenant une première portion de fixation (16) et une deuxième portion de fixation (20) alignées l'une par rapport à l'autre le long d'un axe de solidarisation (28), le raidisseur (14) comprenant une zone centrale (30) s'étendant entre la première portion de fixation (16) et la deuxième portion de fixation (20), le raidisseur (14) comprenant une portion de blocage (32) disposée entre l'une des portions de fixation (16, 20) et la zone centrale (30), la portion de blocage (32) étant configurée pour bloquer une serrure d'un ouvrant (2), au moins une partie de ladite zone centrale (30) étant à distance de l'axe de solidarisation (28).

## Description

La présente invention concerne le domaine des ouvrants équipant notamment des véhicules. La présente invention concerne plus particulièrement un raidisseur disposé au sein de l'ouvrant et permettant de maintenir l'ouvrant dans une position fermée lors d'un choc contre l'ouvrant.

Les ouvrants sont des dispositifs équipant largement les véhicules, et notamment les véhicules automobile, permettant de venir fermer un habitacle du véhicule tout en étant articulés pour permettre à des utilisateurs ou des marchandises d'accéder à l'habitacle. De tels ouvrant sont communément formés d'un cadre délimitant la périphérie de l'ouvrant, d'un panneau extérieur solidarisé au cadre de sorte à former la face extérieure de l'ouvrant et d'un panneau intérieur également solidarisé au cadre de sorte à former la face intérieure de l'ouvrant. Une telle conception de l'ouvrant génère un volume entre le panneau extérieur et le panneau intérieur.

Il est connu de disposer en travers de l'ouvrant un raidisseur permettant d'empêcher la déformation du panneau extérieur lorsqu'une force est exercée sur le panneau extérieur en direction dudit volume interposé entre le panneau intérieur et le panneau extérieur.

Par ailleurs, pour répondre à des mesures de sécurité, lors d'un choc heurtant l'ouvrant, par exemple lors d'une collision avec un autre véhicule venant heurter latéralement l'ouvrant, ce dernier doit rester fermé pour éviter que les occupants ou les marchandises transportés par le véhicule ne soient pas éjectés.

Il est connu de mettre en œuvre des systèmes de verrouillage de l'ouvrant destinés à assurer le maintien de l'ouvrant dans une position verrouiller lors d'une collision venant heurter l'ouvrant. Toutefois, de tels systèmes présentent de nombreux inconvénients notamment la complexité des systèmes mis en œuvre qui sont communément associés à une serrure de l'ouvrant. De plus, de tels système de verrouillage sont classiquement compatible avec un seul type de serrure ce qui limite fortement la polyvalence de ces systèmes de verrouillage.

La présente invention s'inscrit dans ce contexte et se propose de pallier au moins certains inconvénient de l'art antérieur. La présente invention se propose notamment de fournir un raidisseur apte à assurer à la fois une fonction de protection contre les déformations du panneau extérieur et une fonction de verrouillage de l'ouvrant en cas de collision venant heurter ledit panneau extérieur.

Ainsi, la présente invention porte sur un raidisseur destiné à être disposé entre un panneau extérieur et un panneau intérieur d'un ouvrant d'un véhicule, le raidisseur comprenant une première portion de fixation disposée à une première extrémité du raidisseur et configurée pour être solidarisée à un premier montant d'un cadre de l'ouvrant et une deuxième portion de fixation disposée à une deuxième extrémité du raidisseur et configurée pour être solidarisée à un deuxième montant dudit cadre, la première portion de fixation et la deuxième portion de fixation étant alignées l'une par rapport à l'autre le long d'un axe de solidarisation, le raidisseur comprenant une zone centrale s'étendant entre la première extrémité et la deuxième extrémité, le raidisseur comprenant une portion de blocage disposée entre l'une des portions de fixation et la zone centrale, la portion de blocage étant configurée pour bloquer une serrure de l'ouvrant, au moins une partie de ladite zone centrale étant à distance de l'axe de solidarisation.

Le raidisseur est un élément de l'ouvrant destiné à empêcher la déformation du panneau extérieur lorsqu'une pression est exercée contre le panneau extérieur. À cet effet, le raidisseur s'étend en travers de l'ouvrant en étant solidarisé à deux montants opposés du cadre de sorte que la rigidité du panneau extérieur est assurée sur l'ensemble de sa dimension. On comprend que la première extrémité du raidisseur est opposée à la deuxième extrémité du raidisseur pour permettre la solidarisation du raidisseur à deux montants opposés.

L'axe de solidarisation est défini au sein d'une bande formée entre la première portion de fixation et la deuxième portion de fixation. Cette bande est délimité par la largeur de la première portion de fixation et de la deuxième portion de fixation. On comprend qu'il existe une pluralité d'axes de solidarisation passant par la première portion de fixation et la deuxième portion de fixation. Toutefois, tous les axes de solidarisation compris dans cette bande sont parallèles les uns par rapport aux autres. Plus précisément, chaque axe de solidarisation est parallèle à une médiane de ladite bande.

Il est entendu que la zone centrale est à distance de l'axe de solidarisation en ce que la zone centrale est décalée par rapport à l'axe de solidarisation de sorte qu'il existe une distance non nulle entre au moins une partie de la zone centrale et l'axe de solidarisation. Cette disposition autorise une rotation de la zone centrale de manière à ce que celle-ci vienne en interférence mécanique avec la serrure de l'ouvrant, en cas de choc contre le panneau de l'ouvrant.

Selon une caractéristique de l'invention, la partie de la zone centrale s'étend le long d'une direction d'allongement principal sécante de l'axe de solidarisation.

La zone centrale s'étend le long d'une direction d'allongement principal qui est distinct de l'axe de solidarisation. En d'autres termes, la direction d'allongement principal de la zone centrale n'est pas confondue avec l'axe de solidarisation. Cette inclinaison de la direction d'allongement principale de la zone centrale par rapport à l'axe de solidarisation permet de générer un bras de levier important au niveau de la portion de blocage du raidisseur de sorte que ce dernier puisse interférer mécaniquement avec la serrure en cas de choc contre le panneau extérieur de l'ouvrant.

Plus spécifiquement, la direction d'allongement principal de la zone centrale forme un angle avec l'axe de solidarisation compris entre 5° et 20°. Avec un tel angle entre la direction d'allongement principal et l'axe de solidarisation, on s'assure, qu'en cas de choc contre le panneau extérieur venant déformer le raidisseur, la portion de blocage soit la portion du raidisseur qui subit la plus grande amplitude de déformation pour venir contraindre la serrure de l'ouvrant.

Selon une caractéristique de l'invention, la partie de la zone centrale est configurée pour que la direction d'allongement principal et l'axe de solidarisation s'inscrivent dans un premier plan, ledit premier plan étant configuré pour être parallèle à un deuxième plan dans lequel s'étend le panneau extérieur.

L'axe de solidarisation et la direction d'allongement principal sont superposés l'un par rapport à l'autre. Une telle disposition permet de générer une déformation de la zone centrale et par extension de la portion de blocage de sorte que cette dernière vienne au contact de la serrure de l'ouvrant lors d'un choc contre le panneau extérieur.

Selon une caractéristique de l'invention, la portion de blocage s'étend dans le premier plan.

Selon une caractéristique de l'invention, la partie de la zone centrale disposée à distance de l'axe de solidarisation représente au moins 80% de la zone centrale.

Tel qu'évoqué, la zone centrale s'étend depuis la deuxième portion de fixation jusqu'à la portion de blocage qui jouxte la première portion de fixation. Une telle proportion de la zone centrale disposée à distance de l'axe de solidarisation permet de générer une déformation du raidisseur lors d'un choc contre le panneau central permettant de venir plaquer la portion de blocage contre la serrure.

Selon une caractéristique de l'invention, la partie de la zone centrale disposée à distance de l'axe de solidarisation est configurée pour basculer par rapport à la portion de fixation jouxtant la portion de blocage autour d'un axe de basculement qui passe par la portion de blocage et qui s'étend entre la zone centrale et l'axe de solidarisation.

Ce basculement est généré lors d'un choc contre le panneau extérieur. Lorsque la force du choc dépasse une valeur prédéterminée, le raidisseur se déforme de sorte que celui-ci bascule autour de son axe de basculement. Ce basculement permet ainsi de venir positionner la portion de blocage contre la serrure de sorte à empêcher l'ouverture de l'ouvrant.

Selon une caractéristique de l'invention, la portion de fixation jouxtant la portion de blocage s'étend dans un plan sécant à un plan dans lequel s'étend la portion de blocage.

Selon une caractéristique de l'invention, la portion de blocage comprend un bossage configuré pour venir en interférence mécanique avec la serrure.

Cette interférence permet de venir maintenir la serrure dans une configuration dans laquelle celle-ci empêche l'ouverture de l'ouvrant lors d'un choc contre le panneau extérieur. Ce bossage présente avantageusement une forme complémentaire d'un élément de la serrure de sorte que cet élément contraint la serrure pour maintenir l'ouvrant.

L'invention porte également sur un ouvrant comprenant un cadre, un panneau intérieur, un panneau extérieur et un raidisseur conforme à l'une quelconque des caractéristiques précédemment évoqués, l'ouvrant étant apte à prendre une position fermée dans laquelle l'ouvrant est configuré pour obturer une embrasure du véhicule et une position ouverte dans laquelle l'ouvrant est configuré pour être décalé par rapport à ladite embrasure du véhicule, l'ouvrant comprenant un dispositif d'ouverture comprenant une serrure configurée pour autoriser ou interdire le passage de l'ouvrant de sa position fermée à sa position ouverte, la serrure comprenant un levier d'actionnement apte à prendre une première position dans laquelle la serrure autorise le passage de l'ouvrant de sa position fermée à sa position ouverte et une deuxième position dans laquelle la serrure interdit le passage de l'ouvrant de sa position ouverte à sa position fermée.

Selon une caractéristique de l'invention, au moins une partie du raidisseur est disposée directement en regard du levier d'actionnement de la serrure.

Cette disposition d'une partie du raidisseur directement en regard du levier d'actionnement, c'est-à-dire sans qu'un élément soit interposé entre le raidisseur et le levier d'actionnement, permet lors du basculement du raidisseur autour de son axe de basculement de venir directement au contact du levier d'actionnement pour le maintenir dans sa deuxième position pour permettre à la serrure de bloquer l'ouvrant dans sa position fermée.

Selon une caractéristique de l'invention, la partie de la zone centrale du raidisseur s'étendant entre la première extrémité et la deuxième extrémité en étant à distance de l'axe de solidarisation est au contact d'une face intérieure du panneau extérieur.

Il convient de noter qu'il peut exister, par exemple, un bandeau de colle entre le panneau extérieur et la zone centrale du raidisseur. Toutefois, les efforts sont directement repris du panneau extérieur par le raidisseur.

Selon une caractéristique de l'invention, le raidisseur est configuré pour prendre une position nominale dans laquelle la portion de blocage est à distance du levier d'actionnement et une position de collision dans laquelle la portion de blocage est au contact du levier d'actionnement, le levier d'actionnement étant maintenu dans sa deuxième position par la portion de blocage lorsque le raidisseur est dans sa position de collision.

La portion de blocage comprend un bossage formant la partie de la portion de blocage la plus proche du levier d'actionnement, le bossage présentant une forme complémentaire du levier d'actionnement configurée pour interdire le passage du levier d'actionnement de sa deuxième position à sa première position dans la position de collision du raidisseur.

D'autres caractéristiques, détails et avantages de l'invention ressortiront plus clairement à la lecture de la description qui suit d'une part, et d'exemples de réalisation donnés à titre indicatif et non limitatif en référence aux dessins schématiques annexés d'autre part, sur lesquels :
[Fig.1] représente schématiquement une vue générale d'un ouvrant comprenant un raidisseur conforme à la présente invention solidarisé à un cadre de l'ouvrant ;
[Fig.2] représente schématiquement une vue en détail d'une serrure d'un dispositif d'ouverture au niveau d'une portion de blocage du raidisseur visible sur la figure 1 lorsque le raidisseur est dans une position nominale ;
[Fig.3] représente schématiquement une vue en détail de la serrure du dispositif d'ouverture visible sur la figure 2 lorsque le raidisseur est dans une position de collision.

Les caractéristiques, les variantes et les différentes formes de réalisation de l'invention peuvent être associées les unes avec les autres, selon diverses combinaisons, dans la mesure ou elles ne sont pas incompatibles ou exclusives les unes des autres. On pourra notamment considérer des variantes de l'invention ne comprenant qu'une sélection de caractéristiques décrites par la suite de manière isolée des autres caractéristiques décrites, s cette sélection de caractéristiques est suffisante pour conférer un avantage technique ou pour différencier l'invention par rapport à l'état de la technique.

Sur les figures, les éléments communs à plusieurs figures conservent la même référence.

Dans la description détaillée qui va suivre, les dénominations « longitudinale », « transversale » et « verticale » se réfèrent à l'orientation d'un véhicule automobile équipé du raidisseur. Une direction longitudinale correspond à une direction d'avancement dudit véhicule, cette direction longitudinale étant parallèle à un axe longitudinal L d'un repère L, V, T illustré sur les figures. Une direction transversale correspond à une direction perpendiculaire, dans un plan parallèle à la route sur laquelle ledit véhicule automobile circule, à la direction d'avancement du véhicule automobile, cette direction transversale étant parallèle à l'axe transversal T du repère L, V, T et cet axe transversal T étant perpendiculaire à l'axe longitudinal L. Enfin, une direction verticale correspond à une direction parallèle à un axe vertical V du repère L, V, T, cet axe vertical V étant perpendiculaire à l'axe longitudinal L et à l'axe transversal T.

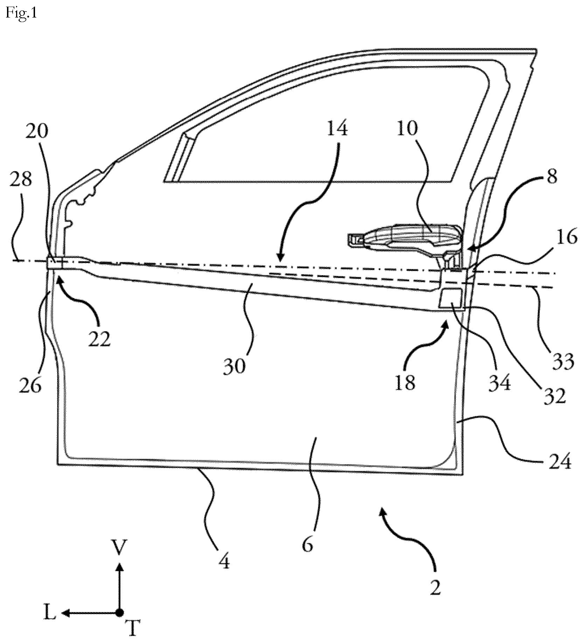

La figure 1 illustre un ouvrant 2 destiné à équiper un véhicule automobile. Cet ouvrant 2 participe à délimiter un habitacle du véhicule automobile et est apte à prendre une position fermée dans laquelle l'ouvrant 2 est configuré pour obturer une embrasure du véhicule et une position ouverte dans laquelle l'ouvrant 2 est configuré pour être décalé par rapport à ladite embrasure dudit véhicule de sorte que l'accès à l'habitacle du véhicule est permis.

L'ouvrant 2 comprend un cadre 4 rigide et délimitant le pourtour de l'ouvrant 2, un panneau extérieur, ici non représenté, et un panneau intérieur 6. Dans la position fermée de l'ouvrant 2, le panneau extérieur forme l'élément de l'ouvrant 2 disposé au contact de l'environnement extérieur au véhicule automobile et le panneau intérieur 6 forme l'élément du véhicule automobile au contact de l'environnement intérieur au véhicule automobile, c'est-à-dire de l'habitacle.

Le panneau extérieur et le panneau intérieur 6 sont solidarisés au cadre 4 de sorte que le panneau intérieur 6 est à une distance du panneau extérieur égale à au moins l'épaisseur du cadre 4. On comprend ainsi que le panneau intérieur 6 et le panneau extérieur sont solidarisés sur deux faces opposées du cadre 4 de sorte que le cadre 4 soit interposé entre le panneau intérieur 6 et le panneau extérieur.

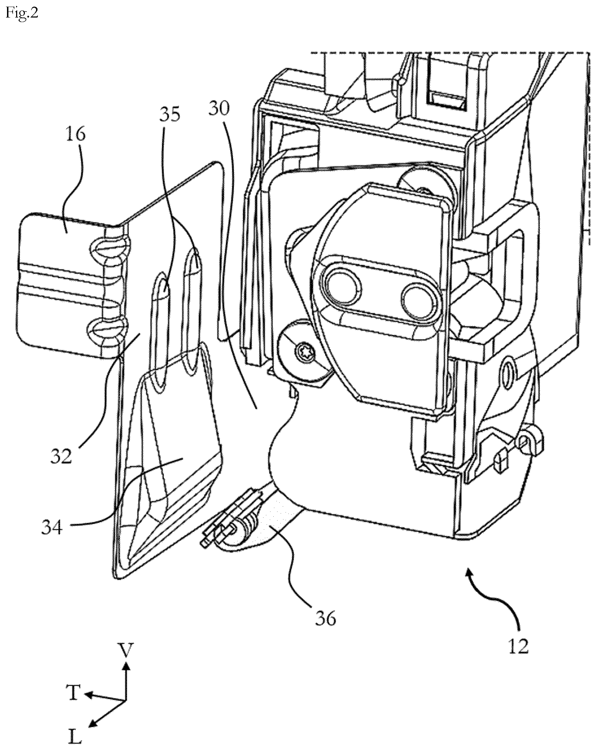

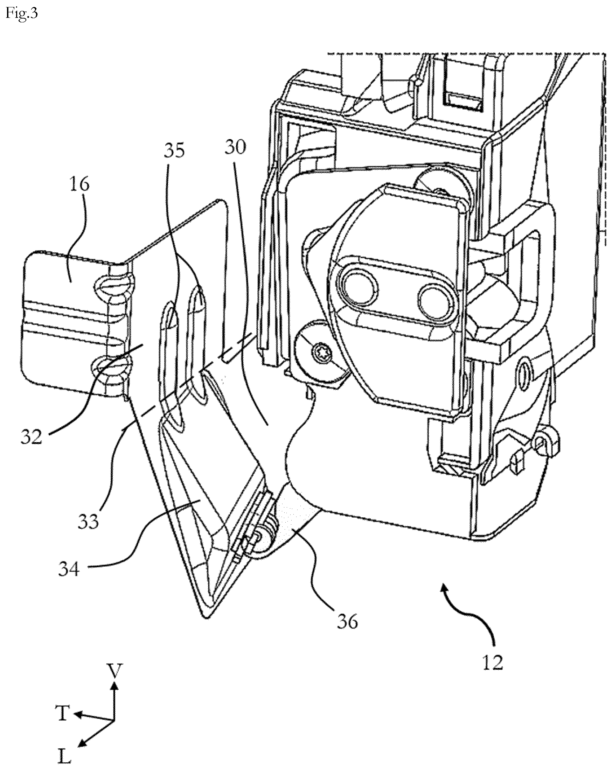

Pour permettre l'ouverture et la fermeture de l'ouvrant 2, l'ouvrant 2 comprend un dispositif d'ouverture 8 formé d'au moins une poignée 10 et une serrure 12, visible sur les figures 2 et 3, configurée pour autoriser ou interdire le passage de l'ouvrant de sa position fermée à sa position ouverte. Une action d'un utilisateur sur la poignée 10 du dispositif d'ouverture 8 permet d'actionner, par exemple, une tringle ou un câble lié à la serrure 12 de sorte à autoriser l'ouverture ou la fermeture de l'ouvrant 2. Il convient de noter que le fonctionnement de la serrure 12 sera décrit plus en détails dans la description qui suivra en lien avec les figures 2 et 3.

En outre, selon l'invention l'ouvrant 2 comprend un raidisseur 14. Ce raidisseur 14 est solidarisé au cadre 4 en étant interposé entre le panneau intérieur 6 et le panneau extérieur. Plus spécifiquement, dans le mode de réalisation représenté, le cadre 4 est formé de deux montants s'étendant principalement verticalement, c'est-à-dire parallèlement à l'axe vertical V, et de deux traverses s'étendant principalement longitudinalement, c'est-à-dire parallèlement à l'axe longitudinal L, et joignant chacun des montants. Le raidisseur 14 est solidarisé au cadre 4 de sorte à être disposé en travers du cadre 4 en étant solidarisé à chacun desdits montants.

La disposition du raidisseur 14 au sein de l'ouvrant 2 est telle que le raidisseur 14 est au contact d'une part du cadre 4 et d'autre part du panneau extérieur. Plus spécifiquement, le raidisseur 14 est directement au contact d'une face intérieure du panneau extérieur disposée en regard du panneau intérieur 6. Une telle disposition permet au raidisseur 14 d'empêcher une déformation du panneau extérieur vers le panneau intérieur 6. On comprend que le raidisseur 8 permet d'empêcher la déformation du panneau extérieur lorsqu'un effort allant du panneau extérieur vers le panneau intérieur 6 est exercé sur ledit panneau extérieur.

En effet, les efforts exercés contre le panneau extérieur sont directement repris par le raidisseur qui permet d'éviter la déformation du panneau extérieur. Il convient de noter qu'à titre d'exemple, un bandeau de colle peut être interposé entre le panneau extérieur et le raidisseur 14 sans que cela n'empêche un « contact direct » entre le raidisseur 14 et le panneau extérieur.

Pour assurer la solidarisation du raidisseur 14 au cadre 4, le raidisseur 14 comprend une première portion de fixation 16 disposée à une première extrémité 18 du raidisseur 14 et une deuxième portion de fixation 20 disposée à une deuxième extrémité 22 du raidisseur 14. La première extrémité 18 du raidisseur 14 est opposée à la deuxième extrémité 22 de sorte que, tel qu'évoqué précédemment, la première portion de fixation 16 est solidarisée à un premier montant 24 du cadre 4 et la deuxième portion de fixation 20 est solidarisée à un deuxième montant 26 du cadre 4, le premier montant 24 étant opposé au deuxième montant 26.

Plus spécifiquement, le première portion de fixation 16 et la deuxième portion de fixation 20 sont, dans le mode de réalisation représenté, formées chacune d'une portion plane venant réaliser un appui plan respectivement contre le premier montant 24 et le deuxième montant 26. Aussi, dans ce mode de réalisation, la solidarisation entre les montants 24, 26 et les portions de fixation 16, 20 est réalisée par une soudure venant solidariser l'ensemble de l'appui plan avec les montants 24, 26. Alternativement, la première portion de fixation 16 et la deuxième portion de fixation 20 peuvent être solidarisées au premier montant 24 et au deuxième montant 26 par une soudure par point, par exemple par deux points juxtaposés.

En outre, la première portion de fixation 16 et la deuxième portion de fixation 20 sont alignées l'une par rapport à l'autre le long d'un axe de solidarisation 28. Plus spécifiquement, cet axe de solidarisation 28 s'inscrit dans une bande s'étendant dans un plan de solidarisation s'étendant verticalement et longitudinalement, c'est-à-dire dans lequel s'inscrit l'axe vertical V et l'axe longitudinal L, et joignant la première portion de fixation 16 à la deuxième portion de fixation 20. Cette bande est définie par la largeur de la première portion de fixation 16 et de la deuxième portion de fixation 20 et comprend une pluralité d'axes de solidarisation 28 parallèles les uns aux autres. On comprend de ce qui précède que chaque axe de solidarisation 28 s'étend parallèlement à une médiane de ladite bande, c'est-à-dire une droite séparant la première portion de fixation 16 et la deuxième portion de fixation 20 en deux parties de mêmes dimensions.

Tel qu'évoqué précédemment, la première portion de fixation 16 et la deuxième portion de fixation 20 sont disposées respectivement au niveau d'une première extrémité 18 et au niveau d'une deuxième extrémité 22. Entre la première extrémité 18 et la deuxième extrémité 22, le raidisseur 14 comprend une zone centrale 30. Cette zone centrale 30 forme la partie du raidisseur 14 destinée à venir directement au contact du panneau extérieur, c'est-à-dire en appui contre ledit panneau extérieur, de sorte à prévenir le risque de déformation de ce dernier précédemment évoqué.

Cette zone centrale 30 est inclinée par rapport à l'axe de solidarisation 28. Plus spécifiquement, la zone centrale 30 s'étend le long d'une direction d'allongement principal depuis la deuxième portion de fixation 20 jusqu'à une portion de blocage 32 disposée entre la zone centrale 30 et la première portion de fixation 16.

La portion de blocage 32 est décalée verticalement, c'est-à-dire parallèlement à l'axe vertical V, par rapport à la première portion de fixation 16 de sorte que la zone centrale 30 s'étend depuis la deuxième portion de fixation 20 jusqu'à la portion de blocage 32 le long de la direction d'allongement principal sécante de l'axe de solidarisation 28. En effet, la direction d'allongement principal de la zone centrale 30 et l'axe de solidarisation forme un angle compris entre 5° et 20°.

Il résulte de cette inclinaison de la zone centrale 30 par rapport à l'axe de solidarisation 28 qu'au moins une partie de ladite zone centrale 30 est à distance de l'axe de solidarisation 28. Plus spécifiquement, l'au moins une partie de ladite zone centrale 30 qui est disposée à distance de l'axe de solidarisation 28 représente au moins 50% de la zone centrale 30, préférentiellement au moins 80%.

Il est à noter que la direction d'allongement principal de la zone centrale 30 et l'axe de solidarisation 28 s'inscrivent dans un premier plan qui est parallèle à un deuxième plan dans lequel s'étend principalement le panneau extérieur. Aussi, dans le mode de réalisation représenté, l'axe vertical V et l'axe longitudinal L s'inscrivent dans le premier plan et dans le deuxième plan. On comprend ainsi que la direction d'allongement principal de la zone centrale 30 et l'axe de solidarisation 28 sont superposés l'un par rapport à l'autre dans ledit premier plan.

En outre, le raidisseur 14 est configuré pour maintenir l'ouvrant 2 dans sa position fermée lors d'un choc contre le panneau extérieur dépassant une force d'une valeur prédéterminée. À cet effet, lors d'un choc dépassant une valeur prédéterminée, la zone centrale 30 est configurée pour basculer par rapport à la portion de fixation jouxtant la portion de blocage 32, ici la premier portion de fixation 16, autour d'un axe de basculement 33 qui passe par la portion de blocage 32 en s'étendant entre la zone centrale 30 et l'axe de solidarisation 28.

La valeur prédéterminée, au-delà de laquelle un choc contre le panneau extérieur entraîne le basculement du raidisseur 14, est définie, dans le mode de réalisation représenté, par des nervures 35, visibles sur les figures 2 et 3, qui permettent au raidisseur 14 d'empêcher la déformation du panneau extérieur lorsque l'effort exercé contre le panneau extérieur est inférieur à la rigidité conférée au raidisseur 14 par les nervures 35. À l'inverse, lorsque l'effort exercé contre le panneau extérieur est supérieur à la rigidité conférée au raidisseur 14 par les nervures 35, le raidisseur 14 est entraîné en basculement autour de son axe de basculement 33.

Tel qu'il sera décrit plus en détail en lien avec la figure 3, l'inclinaison de la zone centrale 30 par rapport à l'axe de solidarisation 28 permet, lors du basculement du raidisseur 14, de générer un mouvement de levier plus important au niveau de la portion de blocage 32, c'est-à-dire au niveau de la première extrémité 18, qu'au niveau de la deuxième extrémité 22.

Tel que visible plus en détail sur les figures 2 et 3, la portion de blocage 32 est configurée pour bloquer la serrure 12 de l'ouvrant 2 de sorte qu'en cas de choc contre le panneau extérieur d'un effort supérieur à la valeur prédéterminée, l'ouvrant 2 est maintenu dans sa position fermée par le raidisseur 14. À cet effet, la portion de blocage 32 qui s'étend dans le premier plan comprend un bossage 34 qui, lorsque l'ouvrant 2 est assemblé, est disposé en regard de la serrure 12.

Ce bossage 34 est formé, dans le mode de réalisation représenté, par un procédé d'emboutissage qui permet de positionner la portion du bossage 34 la plus proche de la serrure 12 en regard d'un levier d'actionnement 36 de ladite serrure 12.

Le levier d'actionnement 36 est un élément de la serrure 12 apte à prendre une première position dans laquelle la serrure 12 autorise le passage de l'ouvrant 2 de sa position fermée à sa position ouverte et une deuxième position, visible sur les figures 2 et 3, dans laquelle la serrure 12 interdit le passage de l'ouvrant 2 de sa position ouverte à sa position fermée.

Le levier d'actionnement 36 est destiné à être relié mécaniquement par un câble ou par une tringle à la poignée 10 de telle sorte que l'actionnement de la poignée 10 par un utilisateur permet de faire passer le levier d'actionnement 36 de sa deuxième position à sa première position.

Dans une position nominale du raidisseur 14, visible sur la figure 2, la portion de blocage 32, et plus particulièrement le bossage 34, est à distance du levier d'actionnement 36 de telle sorte qu'il n'existe aucune interférence mécanique entre le bossage 34 et le levier d'actionnement 36. Dans une position de collision du raidisseur 14, visible sur la figure 3, c'est-à-dire une position dans laquelle la zone centrale 30 a basculé autour de l'axe de basculement 33 à la suite d'une force extérieure exercée contre le panneau extérieur, la portion de blocage 32, et plus particulièrement le bossage 34, vient en interférence mécanique avec le levier d'actionnement 36 de la serrure 12.

Cette interférence mécanique entre la portion de blocage 32 et le levier d'actionnement 36 permet de maintenir le levier d'actionnement 36 dans sa deuxième position dans laquelle la serrure 12 interdit le passage de l'ouvrant de sa position fermée à sa position ouverte. Ainsi, en cas de choc contre le panneau extérieur, le raidisseur 14 permet de s'assurer que l'ouvrant 2 reste dans sa position fermée protégeant les occupants du véhicule automobile contre un risque d'éjection.

La présente invention atteint bien le but qu'elle s'était fixé en proposant un raidisseur permettant d'une part, d'empêcher les déformations d'un panneau extérieur à la suite d'efforts exercés contre ledit panneau extérieur et d'autre part, d'empêcher l'ouverture d'un ouvrant équipé du raidisseur lors d'un choc contre le panneau extérieur de l'ouvrant dont la force dépasse une valeur prédéterminée.

La présente invention ne saurait toutefois se limiter aux moyens et configurations décrits et illustrés ici et elle s'étend également à tout moyen et toute configuration équivalents ainsi qu'à toute combinaison techniquement opérante de tels moyens.

## Revendications

1. Raidisseur (14) destiné à être disposé entre un panneau extérieur et un panneau intérieur (6) d'un ouvrant (2) d'un véhicule, le raidisseur (14) comprenant une première portion de fixation (16) disposée à une première extrémité (18) du raidisseur (14) et configurée pour être solidarisée à un premier montant (24) d'un cadre (4) de l'ouvrant (2) et une deuxième portion de fixation (20) disposée à une deuxième extrémité (22) du raidisseur (14) et configurée pour être solidarisée à un deuxième montant (26) dudit cadre (4), la première portion de fixation (16) et la deuxième portion de fixation (20) étant alignées l'une par rapport à l'autre le long d'un axe de solidarisation (28), le raidisseur (14) comprenant une zone centrale (30) s'étendant entre la première extrémité (18) et la deuxième extrémité (22), le raidisseur (14) comprenant une portion de blocage (32) disposée entre l'une des portions de fixation (16, 20) et la zone centrale (30), la portion de blocage (32) étant configurée pour bloquer une serrure (12) de l'ouvrant (2), **caractérisé en ce que** au moins une partie de ladite zone centrale (30) est à distance de l'axe de solidarisation (28).

2. Raidisseur (14) selon la revendication 1, dans lequel la partie de la zone centrale (30) s'étend le long d'une direction d'allongement principal sécante de l'axe de solidarisation (28).

3. Raidisseur (14) selon la revendication 2, dans lequel ladite partie de la zone centrale (30) est configurée pour que la direction d'allongement principal et l'axe de solidarisation (28) s'inscrivent dans un premier plan, ledit premier plan étant configuré pour être parallèle à un deuxième plan dans lequel s'étend le panneau extérieur.

4. Raidisseur (14) selon la revendication 3, dans lequel la portion de blocage (32) s'étend dans le premier plan.

5. Raidisseur (14) selon l'une quelconque des revendications 1 à 4, dans lequel la partie de la zone centrale (30) disposée à distance de l'axe de solidarisation (28) représente au moins 80% de la zone centrale (30).

6. Raidisseur (14) selon l'une quelconque des revendications 1 à 5, dans lequel la partie de la zone centrale (30) disposée à distance de l'axe de solidarisation (28) est configurée pour basculer par rapport à la portion de fixation (16) jouxtant la portion de blocage (32) autour d'un axe de basculement (33) qui passe par la portion de blocage (32) et qui s'étend entre la zone centrale (30) et l'axe de solidarisation (28).

7. Raidisseur (14) selon l'une quelconque des revendications 1 à 6, dans lequel la portion de fixation (16) jouxtant la portion de blocage (32) s'étend dans un plan sécant à un plan dans lequel s'étend la portion de blocage (32).

8. Raidisseur (14) selon l'une quelconque des revendications 1 à 7, dans lequel la portion de blocage (32) comprend un bossage (34) configuré pour venir en interférence mécanique avec la serrure (12).

9. Ouvrant (2) comprenant un cadre (4), un panneau intérieur (6), un panneau extérieur et un raidisseur (14) selon l'une quelconque des revendications 1 à 8, l'ouvrant (2) étant apte à prendre une position fermée dans laquelle l'ouvrant (2) est configuré pour obturer une embrasure du véhicule et une position ouverte dans laquelle l'ouvrant est configuré pour être décalé par rapport à ladite embrasure du véhicule, l'ouvrant comprenant un dispositif d'ouverture (8) comprenant une serrure (12) configurée pour autoriser ou interdire le passage de l'ouvrant (2) de sa position fermée à sa position ouverte, la serrure (12) comprenant un levier d'actionnement (36) apte à prendre une première position dans laquelle la serrure (12) autorise le passage de l'ouvrant (2) de sa position fermée à sa position ouverte et une deuxième position dans laquelle la serrure (12) interdit le passage de l'ouvrant (2) de sa position ouverte à sa position fermée.

10. Ouvrant (2) selon la revendication 9, dans lequel au moins une partie du raidisseur (14) est disposée directement en regard du levier d'actionnement (36) de la serrure (12).

11. Ouvrant (2) selon l'une quelconque des revendications 9 et 10, dans lequel la partie de la zone centrale (30) du raidisseur s'étendant entre la première extrémité (18) et la deuxième extrémité (22) en étant à distance de l'axe de solidarisation (28) est au contact d'une face intérieure du panneau extérieur.

12. Ouvrant (2) selon l'une quelconque des revendications 9 à 11, dans lequel le raidisseur (14) est configuré pour prendre une position nominale dans laquelle la portion de blocage (32) est à distance du levier d'actionnement (36) et une position de collision dans laquelle la portion de blocage (32) est au contact du levier d'actionnement (36), le levier d'actionnement (36) étant maintenu dans sa deuxième position par la portion de blocage (32) lorsque le raidisseur (14) est dans sa position de collision.
